# EUROPEAN PATENT APPLICATION

(11) **EP 4 435 028 A1**
(43) Date of publication of application: **25.09.2024**
(21) Application number: 24164784.1
(22) Date of filing: 20.03.2024
(51) Int. Cl.: C08G 8/24, C08L 61/06

(54) **BIO-SOURCED POLYMERS FOR AEROSPACE APPLICATIONS AND METHODS THEREOF**

(30) Priority: 24.03.2023 US 202318189848
(71) Applicant: The Boeing Company, Arlington, VA 22202 (US)
(72) Inventor: GROSS, Gwen Marie Lanphere, SEATTLE, 98124 (US); KILEY, Daniel P., SEATTLE, 98124 (US); PISCITELLI, Alicia, SEATTLE, 98124 (US); LEE, Ross Albert, SEATTLE, 98124 (US); UPTHEGROVE, Reid, SEATTLE, 98124 (US)
(74) Representative: Plasseraud IP

(57) **Abstract**

A polymer composition and aerospace component including the polymer composition is disclosed, and the polymer composition includes a phenol-formaldehyde resin having a) a phenol derived from hydrolyzation of a bio-agnostic, plant-based material comprising ortho hydroxy benzyl alcohol; b) a phenol derived from reduction of a bio-agnostic, plant-based material comprising ortho hydroxy benzyl alcohol; and c) condensation products from the phenol derived from hydrolyzation of a bio-agnostic, plant-based material comprising ortho hydroxy benzyl alcohol.

## Description

### TECHNICAL FIELD

The present teachings relate generally to bio-sourced polymers and, more particularly, to bio-sourced polymers for use in aerospace applications.

### BACKGROUND

Polymers are used extensively in the aerospace industry in a variety of applications, including in the manufacturing of aircraft parts, such as fuselage panels, wing components, and landing gear. These parts must meet strict performance requirements, including high strength, durability, and resistance to extreme temperatures and pressures, depending on the application.

In order to provide such materials more sustainably, bio-sourced chemical feed stocks are of interest to reduce reliance on petrochemicals. Existing bio-sourced resins, however, are not chemically identical to aerospace-grade resins. This results in differences in form, fit, and function of the resulting composite materials that can lead to repeated costly qualification, implementation and certification activities.

If replacement polymers incorporating bio-sources can be developed possessing similar properties to polymers made from traditional sources, they can be used in the same applications and perform the same functions, thus enabling an easier replacement of traditional polymers with bio-sourced ones. This can contribute to overall sustainability goals by reducing dependence on fossil fuels. Furthermore, bio-sourced polymers can be made from renewable resources such as plant-based materials, which can be more readily available and can be produced in a more sustainable way as compared to petrochemicals. In some instances, cost savings and improved environmental performance may be realized, as bio-sourced polymers can be biodegradable, compostable, and non-toxic, as well and being derived from sustainable source materials.

Thus, there is a need for polymers incorporating bio-sourced materials to be used in aerospace applications having similar properties as existing materials.

### SUMMARY

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

A bio-based polymer composition is disclosed. The bio-based polymer composition includes a) a phenol derived from hydrolyzation of a bio-agnostic, plant-based material that may include ortho hydroxy benzyl alcohol. The composition also includes b) a phenol derived from reduction of a bio-agnostic, plant-based material which may include ortho hydroxy benzyl alcohol. The polymer composition also includes condensation products from the phenol derived from hydrolyzation of a bio-agnostic, plant-based material that may include ortho hydroxy benzyl alcohol. When the a) phenol is derived from hydrolyzation of a bio-agnostic, plant-based material or b) the phenol is derived from reduction of a bio-agnostic, plant-based material, the polymer composition may further include a para hydroxy benzyl alcohol. The phenol-formaldehyde resin can have a para hydroxy benzyl alcohol content of from about 5 wt% to about 50 wt% based on a total weight of the phenol-formaldehyde resin. The bio-based polymer composition has a molecular weight from about 900 to about 1900 weight-averaged molecular weight (Mw). The polymer composition has a viscosity of from about 1,000 cp to about 12,000 cp. The phenol-formaldehyde resin has an ortho hydroxy benzyl alcohol content of from about 5 wt% to about 50 wt% based on a total weight of the phenol-formaldehyde resin. An aerospace component may include a cured resin made from the polymer composition.

Another bio-based polymer composition is disclosed. The bio-based polymer composition includes a) a phenol derived from hydrolyzation of a bio-agnostic, plant-based material that may include para hydroxy benzyl alcohol. The bio-based polymer composition also includes b) a phenol derived from reduction of a bio-agnostic, plant-based material that may include para hydroxy benzyl alcohol. The bio-based polymer composition also includes c) condensation products from the phenol derived from hydrolyzation of a bio-agnostic, plant-based material that may include ortho hydroxy benzyl alcohol. When the a) phenol is derived from hydrolyzation of a bio-agnostic, plant-based material or b) the phenol is derived from reduction of a bio-agnostic, plant-based material, the bio-based polymer composition may further include ortho hydroxy benzyl alcohol. The phenol-formaldehyde resin can include a para hydroxy benzyl alcohol content of from about 5 wt% to about 50 wt% based on a total weight of the phenol-formaldehyde resin. The phenol-formaldehyde resin has an ortho hydroxy benzyl alcohol content of from about 5 wt% to about 50 wt% based on a total weight of the phenol-formaldehyde resin. The bio-based polymer composition has a molecular weight from about 900 to about 1900 weight-averaged molecular weight (Mw). The bio-based polymer composition has a viscosity of from about 1,000 cp to about 12,000 cp.

An aerospace component is disclosed, including a phenol-formaldehyde resin which may include a) a phenol derived from hydrolyzation of a bio-agnostic, plant-based material that may include hydroxy benzyl alcohol. The aerospace component also includes b) a phenol derived from reduction of a bio-agnostic, plant-based material that may include hydroxy benzyl alcohol. The phenol-formaldehyde resin includes condensation products from the phenol derived from hydrolyzation of a bio-agnostic, plant-based material that may include ortho hydroxy benzyl alcohol. When the phenol is derived from hydrolyzation of a bio-agnostic, plant-based material or the phenol is derived from reduction of a bio-agnostic, plant-based material, the aerospace component may further include ortho hydroxy benzyl alcohol. The phenol-formaldehyde resin can include an ortho hydroxy benzyl alcohol content of from about 5 wt% to about 50 wt% based on a total weight of the phenol-formaldehyde resin. The phenol derived from hydrolyzation of a bio-agnostic, plant-based material or the phenol derived from reduction of a bio-agnostic, plant-based material further may include para hydroxy benzyl alcohol. The phenol-formaldehyde resin has a para hydroxy benzyl alcohol content of from about 5 wt% to about 50 wt% based on a total weight of the phenol-formaldehyde resin. The hydroxy benzyl alcohol can be derived from willow bark. The phenol-formaldehyde resin may include about 20 wt% to about 60% wt% plant-based material based on a total weight of the phenol-formaldehyde resin.

The features, functions, and advantages that have been discussed can be achieved independently in various implementations or can be combined in yet other implementations further details of which can be seen with reference to the following description.

### BRIEF DESCRIPTION OF THE DRAWINGS

The accompanying drawings, which are incorporated in and constitute a part of this specification, illustrate embodiments of the present teachings and together with the description, serve to explain the principles of the disclosure. In the figures:
FIG. 1 illustrates a schematic view of a vehicle, in accordance with the present disclosure.
FIGS. 2A and 2B illustrate reaction schemes related to a conventional phenol-formaldehyde resole synthesis, in accordance with the present disclosure.
FIG. 3 illustrates a reaction scheme for a self-condensation reaction of salicyl alcohol, in accordance with the present disclosure.
FIGS. 4A and 4B illustrate pre-condensation reaction compounds from a conventional phenol-formaldehyde synthesis (FIG. 4A) and a plant-based resin synthesis (FIG. 4B), in accordance with the present disclosure.
FIGS. 5A and 5B illustrate post-condensation reaction compounds from a conventional phenol-formaldehyde synthesis (FIG. 5A) and a plant-based resin synthesis (FIG. 5B), in accordance with the present disclosure.
FIG. 6 depicts a nuclear magnetic resonance (NMR) analysis on petrochemical phenol-formaldehyde (denoted ALP) and plant-based phenol-formaldehyde (denoted RTU) resins, in accordance with the present disclosure.
FIG. 7 depicts the results of a thin layer chromatography (TLC) analysis on phenol-formaldehyde (ALP) and plant-based (RTU) resins, in accordance with the present disclosure.
FIGS. 8A-8C depict high pressure liquid chromatography (HPLC) analysis of phenol-formaldehyde (ALP) and plant-based (RTU) resins, in accordance with the present disclosure.
FIG. 9 depicts thermogravimetric analysis (TGA) analysis of phenol-formaldehyde (ALP) and plant-based (RTU) resins, in accordance with the present disclosure.

It should be noted that some details of the figures have been simplified and are drawn to facilitate understanding of the present teachings rather than to maintain strict structural accuracy, detail, and scale.

### DETAILED DESCRIPTION

Reference will now be made in detail to exemplary embodiments of the present teachings, examples of which are illustrated in the accompanying drawings. Wherever possible, the same reference numbers will be used throughout the drawings to refer to the same, similar, or like parts.

The following description of various typical aspect(s) is merely exemplary in nature and is in no way intended to limit the disclosure, its application, or uses.

As used throughout, ranges are used as shorthand for describing each and every value that is within the range. Any value within the range may be selected as the terminus of the range. In addition, all references cited herein are hereby incorporated by reference in their entireties. In the event of a conflict in a definition in the present disclosure and that of a cited reference, the present disclosure controls.

Unless otherwise specified, all percentages and amounts expressed herein and elsewhere in the specification should be understood to refer to percentages by weight. The amounts given are based on the active weight of the material.

Additionally, all numerical values are "about" or "approximately" the indicated value, and take into account experimental error and variations that would be expected by a person having ordinary skill in the art. It should be appreciated that all numerical values and ranges disclosed herein are approximate values and ranges, whether "about" is used in conjunction therewith. It should also be appreciated that the term "about," as used herein, in conjunction with a numeral refers to a value that may be ± 0.01% (inclusive), ± 0.1 % (inclusive), ± 0.5% (inclusive), ± 1% (inclusive) of that numeral, ± 2% (inclusive) of that numeral, ± 3% (inclusive) of that numeral, ± 5% (inclusive) of that numeral, ± 10% (inclusive) of that numeral, or ± 15% (inclusive) of that numeral. It should further be appreciated that when a numerical range is disclosed herein, any numerical value falling within the range is also specifically disclosed.

As used herein, the term "or" is an inclusive operator, and is equivalent to the term "and/or," unless the context clearly dictates otherwise. The term "based on" is not exclusive and allows for being based on additional factors not described, unless the context clearly dictates otherwise. In the specification, the recitation of "at least one of A, B, and C," includes examples containing A, B, or C, multiple examples of A, B, or C, or combinations of A/B, A/C, B/C, A/B/B/ B/B/C, A/B/C, etc. In addition, throughout the specification, the meaning of "a," "an," and "the" include plural references. The meaning of "in" includes "in" and "on."

Reference will now be made in detail to exemplary examples of the present teachings, examples of which are illustrated in the accompanying drawings. Wherever possible, the same reference numbers will be used throughout the drawings to refer to the same, similar, or like parts.

A bio-sourced material is disclosed herein. As used herein, the term "bio-sourced" or "bio-sourced material" or "bio-resin" may refer to a material, component, substance, device, or the like, capable of or configured to be derived from plant-based or biologically sourced material or ingredients. Additionally, such bio-sourced material may be at least partially decomposed by living organisms, particularly microorganisms in a landfill within a reasonable amount of time, and therefore considered "biodegradable." The material, component, substance, device, or the like may be decomposed into water, naturally occurring gases like carbon dioxide and methane, biomass, or combinations thereof. As used herein, the expression "bio-sourced" or "bio-sourced material" may refer to a resin or component part, where at least one or more components thereof is bio-sourced or biodegradable. In some instances, a majority or substantial number of the components of the resin or component or part are bio-sourced or biodegradable. In other instances, all of the polymer components of the component or part are biodegradable. For example, the polymers and/or other organic-based components of the resin or component or part are bio-sourced or biodegradable while the inorganic materials of the resin or component or part disclosed herein, may not be biodegradable. It should be appreciated that if all polymer and/or organic-based components of a resin, part, or component are bio-sourced or biodegradable, it is generally accepted that the complete resin, part, or component is considered biodegradable. As used herein, the term "compostable" may refer to items that are able to be made into compost or otherwise disposed of in a sustainable or environmentally friendly manner. Compostable materials may be considered to be a subset category of biodegradable materials wherein additional specific environmental temperatures or conditions may be needed to break down a compostable material. While the term compostable is not synonymous with biodegradable, they may be used interchangeably in some instances, wherein the conditions necessary to break down or decompose a biodegradable material are understood to be similar to the conditions necessary to break down a compostable material. As used herein, the term or expression "environmentally friendly resin" or "environmentally friendly component" may refer to a resin or component, respectively, that exhibits minimal, reduced, or no toxicity to the ecosystems or the environment in general. In at least one embodiment, the electrochemical resin and/or components thereof disclosed herein are environmentally friendly.

In the aerospace field, there is a need for polymers incorporating bio-sourced materials to be used in aerospace applications having similar properties as existing materials. Bio-sourced chemical feed stocks help reduce reliance on petrochemical, non-renewable chemicals. This can enable the industry to meet goals related to sustainability and insure a renewable, stable supply chain for aerospace components and materials. Existing bio-sourced resins are not chemically identical to aerospace-grade resins, which can result in differences in form, fit, and function of the resulting composite materials that necessitates repetition of costly qualification, implementation and certification activities.

Examples of the present disclosure include an aerospace component or part having a phenolic resin that can include a phenol-formaldehyde resin, where the phenol is derived from hydrolyzing a bio-agnostic, plant-based high molecular weight material comprising salicyl alcohol (ortho hydroxy benzyl alcohol), para hydroxy benzyl alcohol, or mixtures thereof. The new polymerization route to such aerospace grade, phenolic (phenol-formaldehyde) resins possessing the same or comparable molecular weights and cure state to incumbent aerospace-grade phenolic resins enables essentially the same downstream process for fiber-reinforced composite part component manufacture. The present teachings eliminate the need for hazardous and currently fossil fuel-sourced phenol and formaldehyde feed stocks. The salicyl alcohol or ortho hydroxy benzyl alcohol is also prevalent in nature, as the product of wintergreen oil after additional processing steps. The salicyl alcohol also can be found in willow bark. As there are multiple sources for a bio-sourced salicyl alcohol, for example, willow bark and wintergreen oil, this material can be classified as "bio-agnostic," or available from multiple plant-based or biological sources.

In implementations, an initial condensation of phenol and formaldehyde at the ortho position of phenol results in a derivative of salicylic acid, called salicyl alcohol or ortho hydroxy benzyl alcohol. This compound exists as the glucoside in willow bark, which could be converted to this intermediate in a simple hydrolysis step and as the methyl ester of salicylic acid, methyl salicylate, in wintergreen oil (98%) that can be converted to this intermediate in just a simple reduction step. The present teachings provide a route to achieve the same aerospace grade phenolic resin properties as achieved via currently sourced phenol and formaldehyde feed stock processes for aerospace composite part manufacture, but is an alternatively green or bio-sourced technology, plant-derived salicyl alcohol can be substituted as the feedstock.

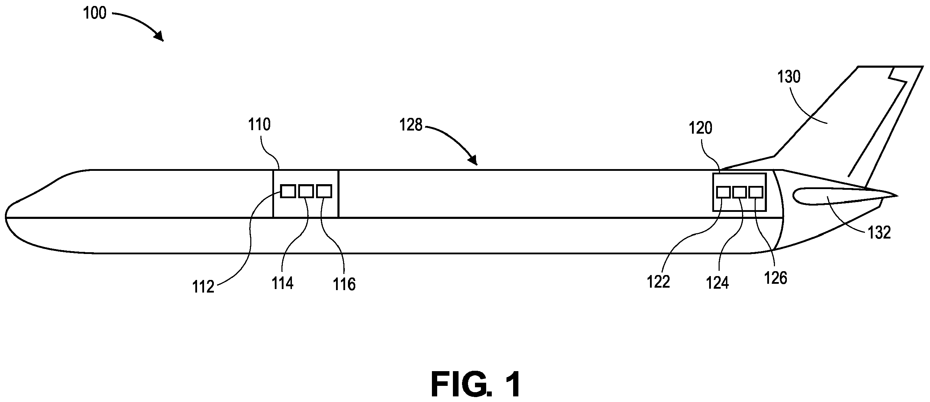

In some implementations, a composite material utilizing bio-based or plant-based resins as described herein can be used in one or more components, layers, or portions of a vehicle 100. FIG. 1 illustrates a schematic view of a vehicle 100, according to an implementation. As shown, the vehicle 100 may include an airplane. The vehicle 100 may also or instead include other types of aircrafts such as helicopters, unmanned aerial vehicles (UAVs), marine vehicles including submarines, spacecrafts, or the like. In other implementations, the vehicle 100 may be or include a car, a boat, a train, or the like. In yet other implementations, the system and method described below may not be implemented in a vehicle, and rather may be implemented in a building.

The vehicle 100 may include one or more lavatories (one is shown: 110). The lavatory 110 may include a sink 112, a toilet 114, and a sensor 116. The sensor 116 may sense/determine whether the lavatory 110 is occupied (e.g., by a passenger) or unoccupied. For example, the sensor 116 may be or include a motion sensor. The vehicle 100 may also include one or more kitchens or galleys (one is shown: 120). The kitchen 120 may include a sink 122, a dishwasher 124, and an ice maker 126. Integrated on or into one or more internal or external surfaces or components of the vehicle 100, the aerospace components made of a composite material 128, 130, 132 utilizing bio-based or plant-based resins as described herein may be applied to reduce or eliminate the use of petroleum based source materials in such components. These utilizing bio-based or plant-based resins can be introduced into components found in locations including, but not limited to, exterior or interior locations in the vehicle as described herein.

The one or more components made of the composite material 128, 130, 132 may include, for example, a resin or polymer material. Example resin materials of the present disclosure include phenolic resins as described herein. Exemplary resins may include up to 100% wt plant-based material, or may include from about 50% wt to about 100% wt, from about 50% wt to about 90% wt, or from about 50% wt to about 75% wt, based on a total weight of the phenolic resin.

Components, parts or composite parts, such as Fiberglass or Carbon Fiber Reinforced Polymer (CFRP) parts, are initially laid-up in multiple layers that together are referred to as a "preform." As used herein the term "uncured composite part" or "preform" refers to one or more plies of composite materials impregnated with resin that is uncured or in some instances partially cured. For example, the uncured composite part may be a fiber-reinforced uncured thermoset polymer composite part. Individual fibers within each layer of the preform may be aligned parallel with each other, but different layers may exhibit different fiber orientations to increase a strength of the resulting composite part along different dimensions. The preform may include a viscous resin that solidifies to harden the preform into a composite part (e.g., for use in an aircraft). Carbon fiber plies that have been impregnated with an uncured thermoset resin or a thermoplastic resin are referred to as "pre-preg." As used herein, the term "pre-preg" refers to pre-impregnated stacks of composite plies, such as epoxy impregnated unidirectional composite tape, woven plies, or chopped pieces of such. A pre-preg may be flexible until it is cured, often by heat and pressure curing or curing within an autoclave. Other types of carbon fiber include "dry fiber" which has not been impregnated with thermoset resin but may include a tackifier or binder. Dry fiber may be infused with resin prior to curing. For thermoset resins, the hardening is a one-way process referred to as curing, while for thermoplastic resins, the resin may return to a reformable or viscous form if it is re-heated.

With respect to fiber-reinforced thermoset polymer composite parts, curing generally refers to the application of heat and/or pressure to crosslink and consolidate the fibers of a fiber-reinforced thermoset polymer composite part. While thermoset resins can be partially cured (i.e. crosslinked) without the application of pressure, it often results in a poorly consolidated part. Accordingly, as used herein, the terms "cure" and "curing" include both the application of heat (to cure/crosslink) and the application of pressure (to consolidate) fiber-reinforced thermoset polymer composite parts, such as the thermoset composite parts of the present disclosure.

In some implementations, a composite part is cured by subjecting it to heat and/or pressure. The heat and/or pressure may be applied according to a predetermined cure schedule specifying applied pressures, temperatures, and durations for which the pressures and/or temperatures are maintained. In some implementations, the composite part is cured by pressure alone. For example, the composite part may be cured at room temperature with the application of pressure. The pressure may be positive pressure or negative pressure.

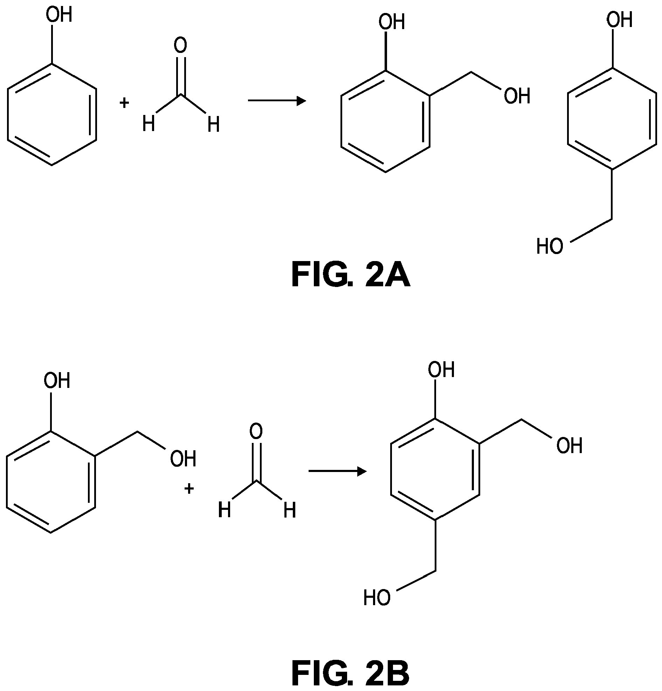

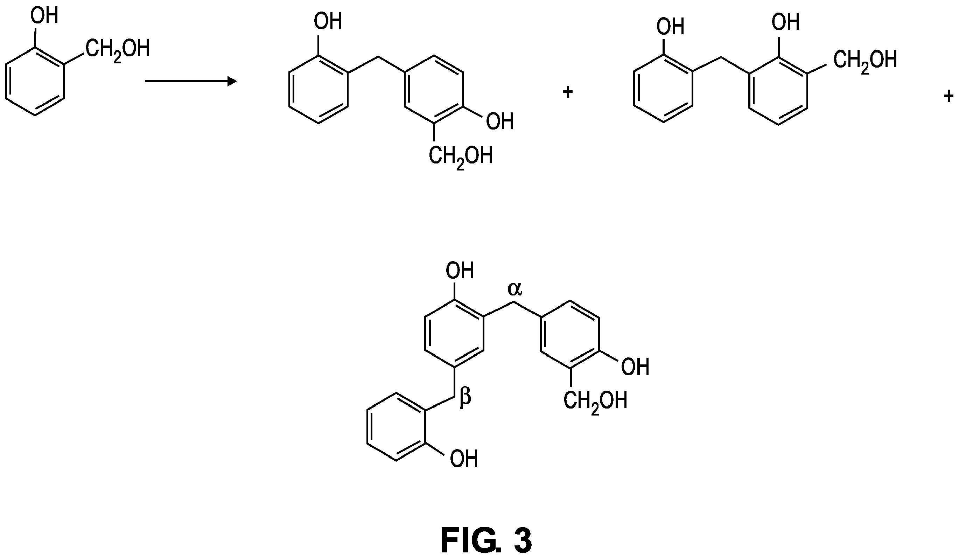

In implementations, one or more bio-resins of the present teachings could be assembled with fiberglass, carbon fiber, Kevlar^{™} type reinforcements, or combinations thereof. While it may be evident in certain implementations that 100% bio-based resin may be utilized, certain examples of one or more of the synthesis pathways described herein can produce a different mix of isomers in the resin, and in such instances, a blend or bio-resin or a bio-sourced resin with a conventional resin can provide a way to overcome any performance gaps in a purely bio-sourced resin. In examples, the bio-based resin can be from about 40 wt% to about 100 wt% bio-based resin, or from about 50 wt% to about 100 wt%, or from about 50 wt% to about 75 wt%, based on a total weight of resin within a composite part or component where the resin can be from 30% to 65% of the total, the rest being reinforcement. It is notable that the plant-based resins as described herein and the methods for making them provide a resin that is indiscernible from one made from conventional fossil fuel-based material sources. For example, a traditional pathway for producing phenol-formaldehyde resin as shown and described later in regard to FIGS. 2A and 2B can be contrasted with a self-condensation reaction for producing a resin using plant-based source materials as shown and described in regard to FIG. 3, yet produce similar product materials.

The methods and materials of the present disclosure provide a polymer composition, including a phenol-formaldehyde resin made of a) a phenol derived from hydrolyzation of a bio-agnostic, plant-based material comprising ortho hydroxy benzyl alcohol, b) a phenol derived from reduction of a bio-agnostic, plant-based material comprising ortho hydroxy benzyl alcohol, and c) condensation products from the a) phenol derived from hydrolyzation of a bio-agnostic, plant-based material comprising ortho hydroxy benzyl alcohol. In implementations, the polymer composition can include compositions wherein the a) phenol derived from hydrolyzation of a bio-agnostic, plant-based material or the b) phenol derived from reduction of a bio-agnostic, plant-based material further comprises para hydroxy benzyl alcohol. The polymer composition has a molecular weight (Mw) from about 200 to about 1900 weight-averaged molecular weight, from about 200 to about 1500 weight-averaged molecular weight, or from about 900 to about 1500 weight-averaged molecular weight, and a viscosity of from about 500 cP to about 12,000 cP, from about 1,000 cP to about 10,000 cP, or from about 1,000 cP to about 4,000 cP. In examples, the bio-based polymer composition incorporates a phenol-formaldehyde resin having a para hydroxy benzyl alcohol content of from about 5 wt% to about 50 wt%, from about 10 wt% to about 40 wt%, or from about 10 wt% to about 30 wt% based on a total weight of the phenol-formaldehyde resin. In examples, the bio-based polymer composition incorporates an ortho hydroxy benzyl alcohol content of from about 5 wt% to about 50 wt%, from about 10 wt% to about 40 wt%, or from about 10 wt% to about 30 wt%, based on a total weight of the phenol-formaldehyde resin. An aerospace component may be composed of a cured resin including any of the aforementioned polymer compositions. Such an aerospace component may include a hydroxy benzyl alcohol that is derived from willow bark. In certain examples, the phenol-formaldehyde resin includes from about 20 wt% to about 60% wt% plant-based material, from about 30 wt% to about 60% wt% plant-based material, or from about 40 wt% to about 50% wt% plant-based material based on a total weight of the phenol-formaldehyde resin. In examples, the phenol-formaldehyde resin has an ortho hydroxy benzyl alcohol content of from about 5 wt% to about 50 wt% based on a total weight of the phenol-formaldehyde resin, while in other examples, the phenol-formaldehyde resin has a para hydroxy benzyl alcohol content of from about 5 wt% to about 50 wt% based on a total weight of the phenol-formaldehyde resin.

FIGS. 2A and 2B illustrate reaction schemes related to a conventional phenol-formaldehyde resole synthesis, in accordance with the present disclosure. In a conventional phenol-formaldehyde resin synthesis, formaldehyde is slowly added to a reaction vessel or kettle, reacting with phenol to form salicyl alcohol (2-hydroxy benzyl alcohol (2HBA) and para salicyl alcohol (4-hydroxybenzyl alcohol (4HBA). This reaction is carried out in the presence of a base catalyst. Once all phenols are mono-hydroxymethylated, excess formaldehyde can lead to di- and tri-substitution, as shown in both FIGS. 2A (di-substitution) and 2B (tri-substitution). As the temperature is raised, these molecules react to form condensation products, which will be discussed further herein.

FIG. 3 illustrates a reaction scheme for a self-condensation reaction of salicyl alcohol (SA) (2-hydroxybenzyl alcohol) (2HBA), in accordance with the present disclosure. In an exemplary plant-based resin synthesis of the present disclosure, the monomer SA undergoes a self-condensation, with the presence of unreacted SA in the reaction kettle. This unreacted SA is the first reaction product, and under temperatures of from 50 to 100 °C. in the presence of base or acid undergoes further self condensation to the self condensation products indicated. This reaction exhibits a reduced complexity as compared to a conventional phenol-formaldehyde synthesis as no formaldehyde is used. However, this particular reaction scheme as shown in FIG. 3 results in no para-para condensations or di- or tri-functional hydroxymethyl monomers as in the conventional synthesis, while dimers and/or trimers may still be formed during self-condensation of SA.

Sources of plant-based materials or bio-based sources for the reaction in FIG. 3 include willow bark, which can contain approximately 29 g salicin/kg bark (2.9 wt. % max yield); wintergreen plant, which can contain up to 99% methyl salicylate present in oil in amounts approximately 4 g oil/kg wintergreen (0.4 wt. %); black Birch bark, containing up to 99% methyl salicylate present in oil at approximately 5g oil/kg birch bark (0.5 wt %), or the like. Additional sources can include microbial pathway reactions, where approximately 600 mg/L salicyl alcohol can be obtained from engineered *E. coli*, or the like, provided the desired salicyl alcohol can be derived from the source.

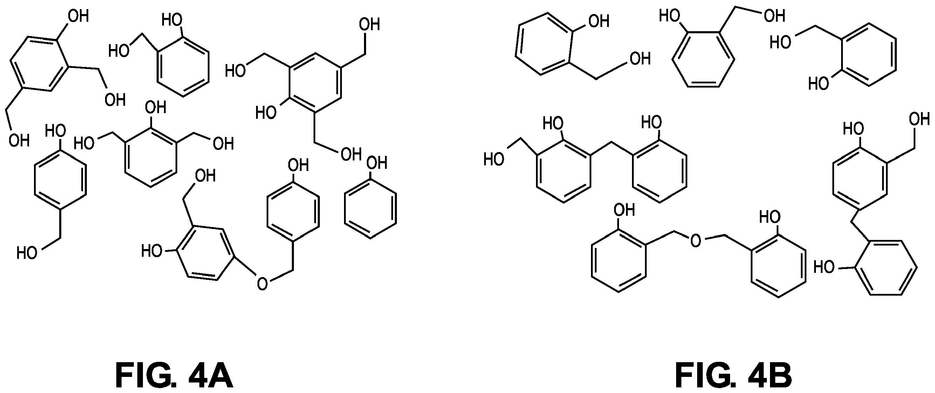

FIGS. 4A and 4B illustrate anticipated pre-condensation reaction compounds from a conventional phenol-formaldehyde synthesis and a plant-based resin synthesis, in accordance with the present disclosure. Several pre-condensation reaction compounds from a conventional phenol-formaldehyde synthesis are shown in FIG. 4A, including di-substituted, tri-substituted, and other variants of salicyl alcohols. By comparison, pre-condensation reaction compounds from a plant-based resin synthesis are shown in FIG. 4B, including similar di-substituted, tri-substituted, and other variants of salicyl alcohols. While there are no significant differences noted between the traditional (FIG. 4A) and the bio-based (FIG. 4B) pathways, there are some differences in the para vs ortho substituted structures, and slight variations in the di- and tri-substituted structures, as well as those with para-para bonding.

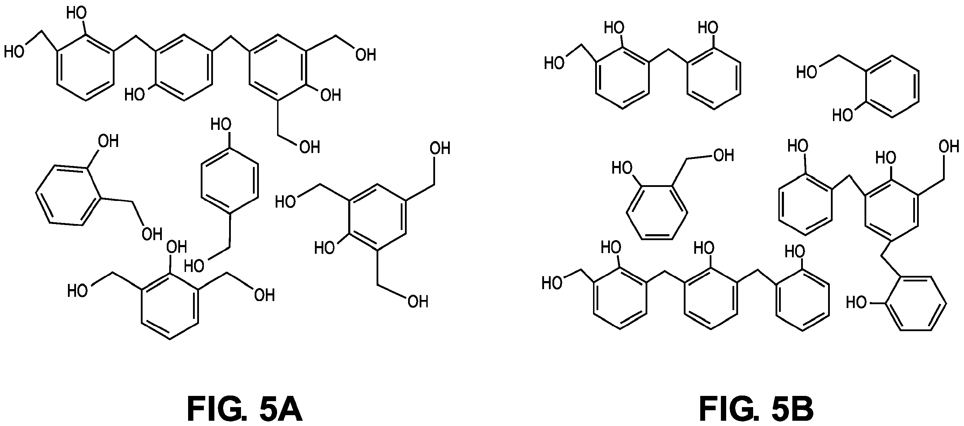

FIGS. 5A and 5B illustrate post-condensation reaction compounds from a conventional phenol-formaldehyde synthesis and a plant-based resin synthesis, in accordance with the present disclosure. In the reaction compounds shown, several post-condensation reaction compounds from a conventional phenol-formaldehyde synthesis are shown in FIG. 5A, including products resulting from self-condensation reactions of compounds shown in FIG. 4A. By comparison, post-condensation reaction compounds from a plant-based resin synthesis are shown in FIG. 5B, including products resulting from self-condensation reactions of compounds shown in FIG. 5B. While there are subtle differences noted between the traditional (FIG. 5A) and the bio-based (FIG. 5B) pathways, the structures are indicative of intermediate compounds that would result in similar polymers upon further reaction. Based on the following analyses and evaluations, it is deduced that these post-condensation compounds form the same resin upon curing. These specific compounds and isomers thereof are known to those skilled in the art.

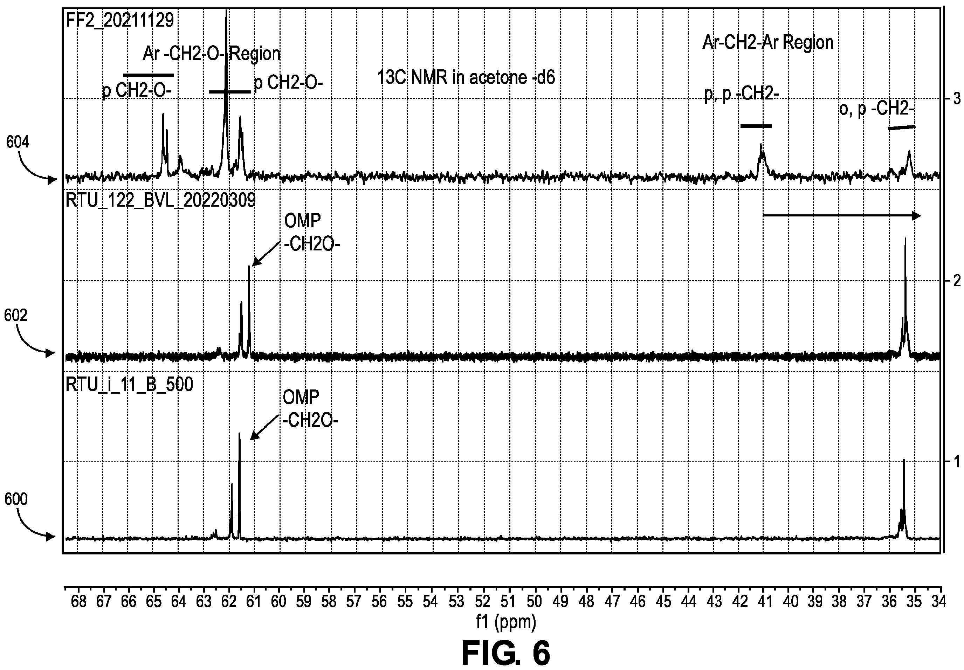

FIG. 6 depicts a nuclear magnetic resonance (NMR) analysis on petrochemical phenol-formaldehyde (labeled "ALP") and plant-based phenol-formaldehyde (labeled "RTU") resins, in accordance with the present disclosure. As shown in the following evaluations, the spectra of a conventional phenol-formaldehyde resin (ALP) 604 are compared with plant-based (RTU) resins, 600, 602.While the NMR results exhibit evidence of no para-para bonding in the RTU resin spectra, there are many points of evidence demonstrating equivalence of conventional and plant-based resins. In the conventional phenol-formaldehyde resin (ALP) resin, -CH₂-O- content is 72.6%, while in the plant-based (RTU) resins, the -CH₂-O- content is 27.4%. Also notable is that the Ar-CH₂-Ar content is 33% in the conventional phenol-formaldehyde resin (ALP) resin, while in the plant-based (RTU) resins, the Ar-CH₂-Ar content is 67%. Furthermore, the starting material of the plant-based (RTU) resins were 38%. As the SA condensation normally has -50% starting material, this could explain higher weight-averaged molecular weight and viscosity noted in the plant-based (RTU) resins. The higher SA content from the plant-based process results in a material that includes intermediaries that are slightly different in structure as shown in Figure 5A versus 5B as well as having a greater SA content in the source material. This can explain the reason for a molecular weight (also expressed as a number of repeat units) being greater for the plant-based material. The higher molecular weight (MW) and the slight differences in chemical structure are related to the higher viscosity of the plant-based resin. This relationship is well known to those skilled in the art of polymer synthesis, in terms of higher MW correlated to higher viscosity.

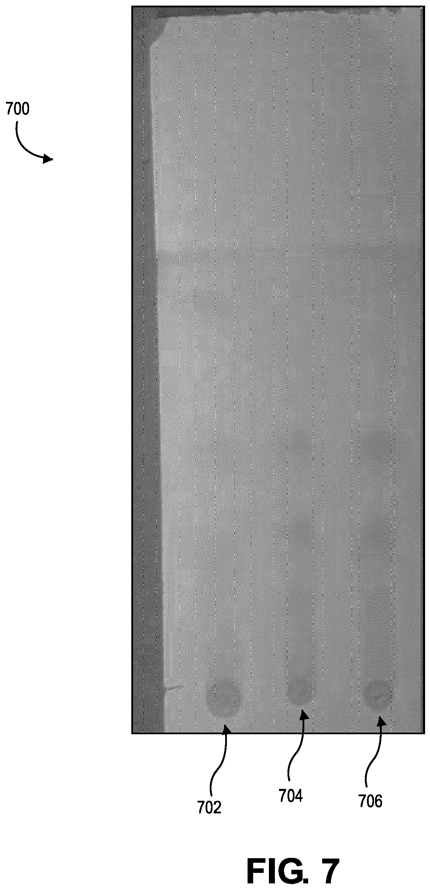

FIG. 7 depicts the results of a thin layer chromatography (TLC) analysis on petrochemical phenol-formaldehyde (denoted as "ALP") and plant-based phenol-formaldehyde (denoted as "RTU") resins, in accordance with the present disclosure. The thin layer chromatography was conducted utilizing 2:1 hexane to ethyl acetate for mobile phase, while each resin sample was dissolved in methanol. Visualization was conducted using UV detector and/or iodine crystals. The TLC results 700 indicate that the plant-based resins, RTU1 704 and RTU2 706 are almost identical to the conventional phenol-formaldehyde resin ALP 702. There is a very faint visual indication of residual phenol on the top left in the ALP sample (conventional phenol-formaldehyde resin). This residual phenol is not present in the samples indicated by RTU1 and RTU 2 (plant-based resin). The TLC visual test results exhibit bio-equivalence of the plant-based resins samples to the phenol-formaldehyde (ALP) conventional resin. While there are observable similarities near the origin between plant-based and conventional PF resins, there is the presence of residual phenol and less salicyl alcohol in the phenol-formaldehyde (ALP) resin as compared to the plant-based (RTU) resins.

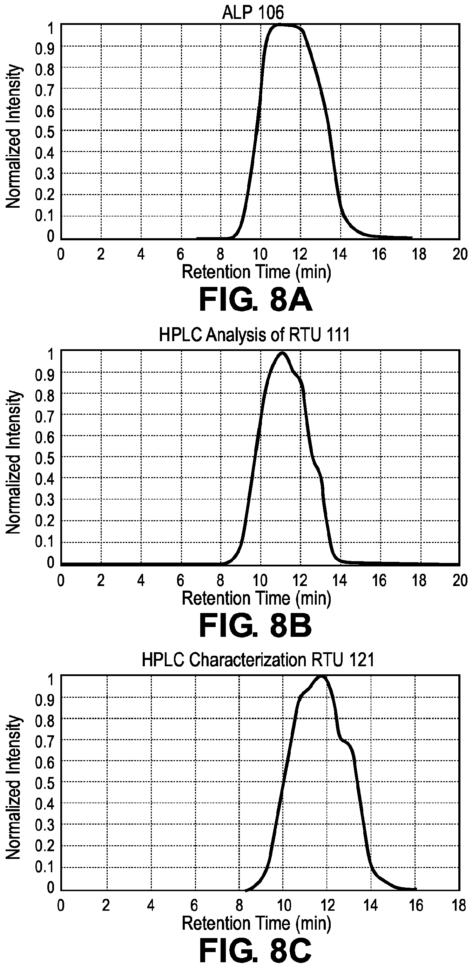

FIGS. 8A-8C depict high pressure liquid chromatography (HPLC) analysis of phenol-formaldehyde (ALP) and plant-based (RTU) resins, in accordance with the present disclosure. Characterization by High Pressure Liquid Chromatography (HPLC) demonstrates a higher weight-averaged molecular weight value for the bio-based resins RTU 111 and RTU 121, as compared to the phenol-formaldehyde (ALP 106) resin, as shown in Table 1. Mn and Mw refer to the number average molecular weight and weight average molecular weight, respectively. Measurement of the molecular weight distribution of the synthesized resins, was conducted using high pressure liquid chromatography (HPLC) using a Shimadzu CTO-20AC HPLC system with UV-vis detection employing a Jordi Gel DVB 100Å column, in accordance with D5296 - 19, Standard Test Method for Molecular Weight Averages and Molecular Weight Distribution of Polystyrene by High Performance Size-Exclusion Chromatography. It should be noted that other standardized measurement protocols and equipment known to one skilled in the art could be employed as an alternative method.

**Table 1: High Pressure Liquid Chromatography (HPLC) of phenol-formaldehyde (ALP) and plant-based (RTU) resins**

| **Sample** | **Mn** | **Mw** |
|---|---|---|
| ALP 106 (P-F) | 302 | 586 |
| RTU 111 (SA) | 638 | 1548 |
| RTU 121 (SA) | 402 | 1163 |
| Industry Average | 300 | 400-1000 |

As most other properties and characteristics of the plant-based resins are indistinguishable from the conventional resin sample, reduction of the weight-average molecular weight of the pre-cured resin may be of additional interest, by experimentation with the use of 4-hydroxybenzyl alcohol (4-HBA), which can enable para substitution using the same conditions as aforementioned for 2-HBA. Reaction times and temperatures are crucial to the physical and chemical properties of the resins of the present disclosure. In the derivation of a bio equivalent resin, the intent is to provide a material that is as close to standards and performance of current industrial resins. Therefore, by adjusting the time and temperature of the polymerization runs based on previous results, the characteristics of the plant-based resin can be tailored and tuned to more closely match traditional phenolic resins. This further alleviates a need for any changes in the pre-cure processing of such materials. The addition of 4-HBA can positively affect the crosslinking of the pre-cured resin by introducing para-para bonds. Post-cure resins of 2-HBA and 2-/4-HBA can provide differences in additional pre-cure bonding complexity and a cured phase used in composites.

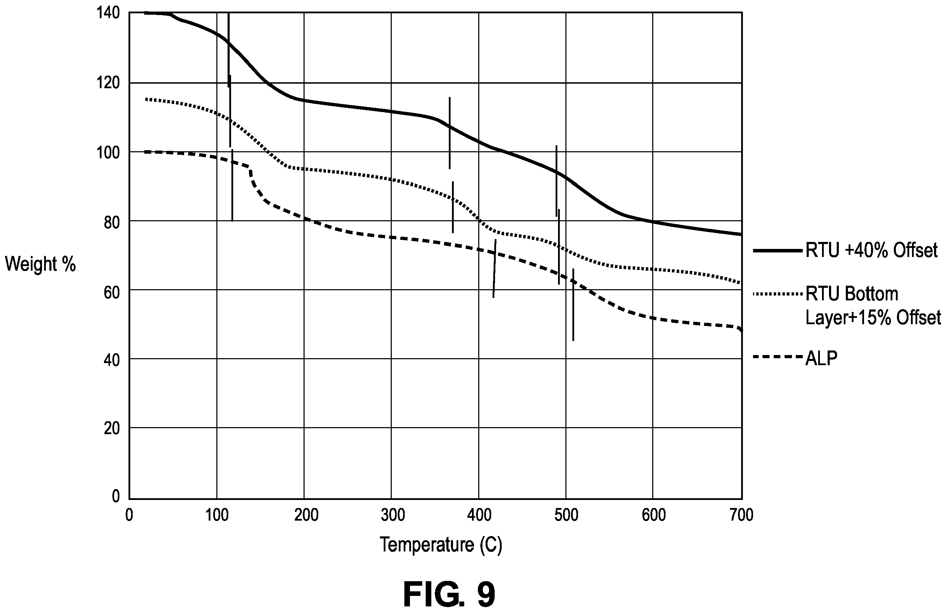

FIG. 9 depicts thermogravimetric analysis (TGA) analysis of phenol-formaldehyde (ALP) and plant-based (RTU) resins, in accordance with the present disclosure. Characterization utilizing TGA of conventional phenol-formaldehyde (ALP) samples and multiple runs of plant-based (RTU) including plant-based bottom layer subject to countertop evaporation, showed no noticeable difference between the plant-based samples. As compared to the phenol-formaldehyde (ALP) samples the RTU samples show similar paths, but the phenol-formaldehyde (ALP) has a second break approximately 65 °C higher by comparison. Therefore, while offset, the values are consistent between phenol-formaldehyde (ALP) and plant-based (RTU) resins, even though the ALP has a higher second break. Typical curing for such a resin is 350°F. While the HPLC is indicative of the chemical nature of the resins, TGA exhibits what occurs when the resins are heated. Once again, the TGA exhibits similar performance between the phenol-formaldehyde (ALP) and plant-based (RTU) resins.

Additional properties of the phenol-formaldehyde (ALP) and plant-based (RTU) resins are summarized in Table 2.

**Table 2: Additional property summary of phenol-formaldehyde (ALP) as compared to plant-based (RTU) resins**

| **Property** | **Unit** | **FF PF 1** | **FFPF 2** | **Part Renew PF** | **RTU-i-111** | **RTU-i-121** | **Typical Industry Values** |
|---|---|---|---|---|---|---|---|
| Free Formaldehyde | % free HCHO | 0.5 | 0.4 | 0.4 | -- | -- | <1 |
| pH | | 8.3 | 8.5 | 8.5 | 7.62 | 8.58 | 8-9 |
| Oven Solids | % | 84.7 | 74.2 | 73.9 (77.4) | 79 | 78.2 | 65-75 |
| Viscosity | cP | -- | 586 | 305 | 8908 | 2074 | 300-1000 |
| Density | g/mL | 1.1 | 1.1 | 1.1 | -- | -- | 1.2 |
| T_{cure} | C | 156 | 156 | 158 | | | 150 |
| Mw | Da | 1033 | 759 | 586 | 1548 | 1163 | 400-1000 |
| Mn | Da | 517 | 374 | 302 | 638 | 402 | 300 |

Conclusions based on these and other results of characterizations disclosed herein include several similarities between the phenol-formaldehyde (ALP) and plant-based (RTU) resins. The resins are similar in TGA performance and NMR and TLC detected structures, as well as the presence and concentrations of SA in the resins. Additionally, the pH, solids, cure temperature (T_{cure}) are similar between phenol-formaldehyde (ALP) and plant-based (RTU) resins. Among differences in the resin are some bonding differences, for example, there subtle differences in location and ether vs. methylene concentrations, as well as molecular weight and viscosity. Consequently, the use of bio-sourced salicyl alcohol created an almost indiscernible resin compared to a phenol-formaldehyde resin.

While the present teachings have been illustrated with respect to one or more implementations, alterations and/or modifications may be made to the illustrated examples without departing from the spirit and scope of the appended claims. For example, it may be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It may be appreciated that structural objects and/or processing stages may be added, or existing structural objects and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items may be selected. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. The terms "couple," "coupled," "connect," "connection," "connected," "in connection with," and "connecting" refer to "in direct connection with" or "in connection with via one or more intermediate elements or members." Finally, the terms "exemplary" or "illustrative" indicate the description is used as an example, rather than implying that it is an ideal. Other embodiments of the present teachings may be apparent to those skilled in the art from consideration of the specification and practice of the disclosure herein. It is intended that the specification and examples be considered as exemplary only, with a true scope and spirit of the present teachings being indicated by the following claims.

## Claims

1. A bio-based polymer composition, comprising:
a phenol-formaldehyde resin comprising:
a phenol derived from hydrolyzation of a bio-agnostic, plant-based material comprising ortho hydroxy benzyl alcohol or para hydroxy benzyl alcohol;
a phenol derived from reduction of a bio-agnostic, plant-based material comprising ortho hydroxy benzyl alcohol or para hydroxy benzyl alcohol; and
condensation products from the phenol derived from hydrolyzation of a bio-agnostic, plant-based material comprising ortho hydroxy benzyl alcohol.

2. The bio-based polymer composition of claim 1, wherein the phenol derived from hydrolyzation of a bio-agnostic, plant-based material or the phenol derived from reduction of a bio-agnostic, plant-based material comprises ortho hydroxy benzyl alcohol and para hydroxy benzyl alcohol.

3. The bio-based polymer composition of claim 1 or 2, wherein the bio-based polymer composition has a molecular weight from about 900 to about 1900 weight-averaged molecular weight (Mw).

4. The bio-based polymer composition of any of preceding claims, wherein the bio-based polymer composition has a viscosity of from about 1,000 cp to about 12,000 cp.

5. The bio-based polymer composition of any of preceding claims, wherein the phenol-formaldehyde resin has a para hydroxy benzyl alcohol content of from about 5 wt% to about 50 wt% based on a total weight of the phenol-formaldehyde resin.

6. The bio-based polymer composition of any of preceding claims, wherein the phenol-formaldehyde resin has an ortho hydroxy benzyl alcohol content of from about 5 wt% to about 50 wt% based on a total weight of the phenol-formaldehyde resin.

7. An aerospace component, comprising:
a phenol-formaldehyde resin comprising:
a) a phenol derived from hydrolyzation of a bio-agnostic, plant-based material comprising hydroxy benzyl alcohol;
b) a phenol derived from reduction of a bio-agnostic, plant-based material comprising hydroxy benzyl alcohol; and
c) condensation products from the phenol derived from hydrolyzation of a bio-agnostic, plant-based material comprising ortho hydroxy benzyl alcohol.

8. The aerospace component of claim 7, wherein the a) phenol derived from hydrolyzation of a bio-agnostic, plant-based material or b) the phenol derived from reduction of a bio-agnostic, plant-based material comprises ortho hydroxy benzyl alcohol.

9. The aerospace component of claim 7 or 8, wherein the a) phenol derived from hydrolyzation of a bio-agnostic, plant-based material or b) the phenol derived from reduction of a bio-agnostic, plant-based material comprises para hydroxy benzyl alcohol.

10. The aerospace component of any of claims 7 to 9, wherein the hydroxy benzyl alcohol is derived from willow bark.

11. The aerospace component of any of claims 7 to 10, wherein the phenol-formaldehyde resin comprises about 20 wt% to about 60% wt% plant-based material based on a total weight of the phenol-formaldehyde resin.

12. The aerospace component of claim 8, wherein the phenol-formaldehyde resin has an ortho hydroxy benzyl alcohol content of from about 5 wt% to about 50 wt% based on a total weight of the phenol-formaldehyde resin.

13. The aerospace component of claim 12, wherein the phenol-formaldehyde resin has an ortho hydroxy benzyl alcohol content of from about 10 wt% to about 40 wt% based on a total weight of the phenol-formaldehyde resin.

14. The aerospace component of claim 9, wherein the phenol-formaldehyde resin has a para hydroxy benzyl alcohol content of from about 5 wt% to about 50 wt% based on a total weight of the phenol-formaldehyde resin.

15. The aerospace component of claim 14, wherein the phenol-formaldehyde resin has a para hydroxy benzyl alcohol content of from about 10 wt% to about 40 wt% based on a total weight of the phenol-formaldehyde resin.
